# EUROPEAN PATENT APPLICATION

(11) **EP 4 124 833 A1**
(43) Date of publication of application: **01.02.2023**
(21) Application number: 21192724.9
(22) Date of filing: 24.08.2021
(51) Int. Cl.: G01D 5/20

(54) **LINEAR INDUCTIVE POSITION SENSOR**

(30) Priority: 28.07.2021 US 202163220150 P
(71) Applicant: Renesas Electronics America Inc., Milpitas, California 95035 (US)
(72) Inventor: QAMA, Gentjan, 81371 München (DE); TUNA, Jon, Laguna Niguel, CA, 92653 (US)
(74) Representative: Lippert Stachow Patentanwälte Rechtsanwälte Partnerschaft mbB

(57) **Abstract**

The invention relates to a linear inductive position sensor (1), comprising a transmitter coil (2) and at least two receiver coils (3, 4), particularly a sine receiver coil (3) and a cosine receiver coil (4), a moving target (5) and an electronic control circuit (6),
which is characterized in that
the moving target (5) comprises at least two elements (7) that are spaced from each other and fixed relative to each other, so that they move simultaneously.

## Description

The invention relates to a linear inductive position sensor, comprising a transmitter coil and at least two receiver coils, particularly a sine receiver coil and a cosine receiver coil, a moving target and an electronic control circuit.

Inductive position sensors implement a magnet-free technology, utilizing the physical principles of eddy currents or inductive coupling to detect the position of a target that is moving above a set of coils, consisting for example of one transmitter coil and two receiver coils, particularly a sine receiver coil and a cosine receiver coil.

In a practical implementation the three coils, one transmitter coil and two receiver coils, are typically provided as copper traces on a printed circuit board (PCB). They are arranged such that the transmitter coil induces a secondary voltage in the two receiver coils, which depends on the position of the conductive, e.g. metallic, target above the receiver coils. Therefore, the inductive sensor comprises an oscillator that generates a radio-frequency signal, which is applied to the transmitter coil to create a high frequency magnetic field. This high frequency magnetic field is picked up by the receiver coils, particularly the sine receiver coil and the cosine receiver coil. Depending on the position of the conductive target above the coils, the secondary voltage picked up by the receiver coils is changing in amplitude, allowing the determination of the target's position by analysing this effect. For example, the target position is calculated by the arctangent of the sine signal divided by the cosine signal.

A signal representation of the target's position over the coils is obtained by demodulating and processing the secondary voltages from the receiver coils. Usually, after filtering the receiver signals are demodulated and amplified, then converted to a digital signal by an analog-to-digital converter and further processed in a digital signal processor, like being converted from sine and cosine signals into an angle representation by means of a CORDIC algorithm, transforming rectangular coordinates to polar coordinates. Following this digital signal processing, a signal representative of the target's position over the coils is available in digital format and fed to an output interface of the inductive position sensor.

The conductive target can be any kind of metal, such as aluminium, steel or a printed circuit board with a printed copper layer. Usually, an inductive position sensor comprises a metallic target. However, the inductive position sensor may use different types of targets, such as wire loops or passive resonant circuits comprised of inductances and capacitors.

Most inductive position sensors comprise two receiver coils per sensor, particularly a sine receiver coil and a cosine receiver coil. Other embodiments of inductive position sensors may be using three receiver coils instead of two receiver coils.

In a linear inductive position sensor the transmitter coil and the at least two receiver coils are arranged along a straight movement axis, which corresponds to the path of movement of the target. As the target moves along this straight movement axis the target partly covers the at least two receiver coils, such that the transmitter coil induces a secondary voltage in the two receiver coils, which depends on the position of the conductive target above the receiver coils.

These linear inductive position sensors known from the prior art have the problem that the detectable movement range is always less than the length of the used coil set. For small designs this can result in coil sets requiring three times the space of the detectable movement range. Furthermore, the magnitude of detected signal is very low and the error is relatively high. It is therefore an object of the present invention to provide a linear inductive position sensor with a minimal space requirement even for small designs and providing improved signal quality.

According to the present invention this object is solved by a linear inductive position sensor, comprising a transmitter coil and at least two receiver coils, particularly a sine receiver coil and a cosine receiver coil, a moving target and an electronic control circuit, which is characterized in that the moving target comprises at least two elements that are spaced from each other and fixed relative to each other, so that they move simultaneously.

The linear inductive position sensor bases on the above-described inductive position sensor known from the prior art, so that the above mentioned features also apply to the linear inductive position sensor of the present invention.

To solve the above problem, the moving target comprises at least two elements that are spaced from each other and fixed relative to each other, so that they move simultaneously. By shielding two pre-defined areas of the at least two receiver coils the detectable movement range can be increased up to the length of the used coil set, particularly the length of the at least two receiver coils. Furthermore, the signal magnitude is increased and the signal quality is improved.

In a variant of the invention at least the transmitter coil and the at least two receiver coils, preferably also the electronic control circuit, are arranged on a single printed circuit board. Thereby, the overall size of the linear inductive position sensor is reduced, as all the necessary components are arranged on a single printed circuit board and the design can be easily optimized with respect to the required space.

According to a variant of the invention the moving target, particularly the at least two elements, comprise a printed circuit board and/or metallic components. The at least two elements of the moving target cover different portions of at least two receiver coils. The at least two elements must be conductive to influence the voltage picked up by the at least two receiver coils. This can be easily achieved by using a printed circuit board and/or metallic components.

Pursuant to a variant of the invention the two elements of the moving target are independent of each other or connected via one or more connecting portions. According to the present invention the moving target comprises at least two elements that are spaced from each other and fixed relative to each other, so that they move simultaneously. These elements can be independent of each other as long as it is guaranteed that both elements move simultaneously and not relative to each other. This can be for example achieved by a common substrate for the at least two elements. It is also possible that the at least two elements are connected to each via one or more connecting portions. The one or more connecting portions can be conductive or non-conductive. In case of conductive connecting portions these should not change along the linear movement path of the target, so that these conductive connecting portions do not change the voltage picked up by the at least two receiver coils as the target moves along the linear movement path.

In a preferred variant of the invention the at least two elements of the moving target are arranged on a solid body, particularly a non-conductive solid body. Thereby, the at least two elements of the moving target move simultaneously and do not move relative to each other. The non-conductive solid body is for example the base plate of a printed circuit board and the at least two elements of the moving target are printed as copper traces on the printed circuit board.

According to an advantageous variant of the invention the distance between the at least two elements of the moving target is smaller than or equal to the length of the at least two receiver coils or the length of the transmitter coil in the linear sensing direction. This guarantees that the at least two elements can cover two-predefine areas of the coils of the linear inductive position sensor at the same time. Pursuant to a preferred variant of the invention the distance between the outer ends of the at least two elements of the moving target in the linear sensing direction is smaller than or equal to the length of the at least two receiver coils or the length of the transmitter coil in the linear sensing direction. In this variant the at least two elements cover two-defined areas of the coils with the complete area of these at least two elements since the distance between the outer ends of the at least two elements in the movement direction is equal or smaller than the length of the transmitter coil or at least two receiver coils.

In a variant of the invention the electronic control circuit comprises an oscillator connected to the transmitter coil and a signal conditioning and processing unit connected to the at least two receiver coils. The oscillator of the electronic control circuit generates a radio-frequency signal, which is applied to the transmitter coil to create a high frequency magnetic field. This high frequency magnetic field is picked up by the receiver coils, particularly the sine receiver coil and the cosine receiver coil. Depending on the position of the at least two elements of the target above over the coils, the secondary voltage picked up by the receiver coils is changing in amplitude and phase, allowing the determination of the target's position by analysing these effects. The target's position is calculated by the signal conditioning and processing unit. A signal representation of the target's position over the coils is obtained by demodulating and processing the secondary voltages from the receiver coils. Usually, after filtering the receiver signals are demodulated any amplified, then converted to a digital signal by an analog-to-digital converter and further processed in the digital signal processor, like being converted from sine and cosine signals into an angle representation by means of a CORDIC algorithm, transforming rectangular coordinates to polar coordinates. Following this digital signal processing, a signal representative of the target's position over the coils is available in digital format and fed to an output interface of the linear inductive position sensor.

According to a variant of the invention the linear inductive position sensor comprises two receiver coils, particularly a sine receiver coil and a cosine receiver coil.

Pursuant to a further variant the transmitter coil is arranged outside of the at least two receiver coils, particularly in the circumference of the at least two receiver coils.

In the following the invention will be further explained with respect to the embodiment shown in the figures. It shows:
- Fig. 1: a schematic view of an embodiment of a linear inductive position sensor according to the invention, and
- Fig. 2: different embodiments of a moving target for a linear inductive position sensor according to the invention.

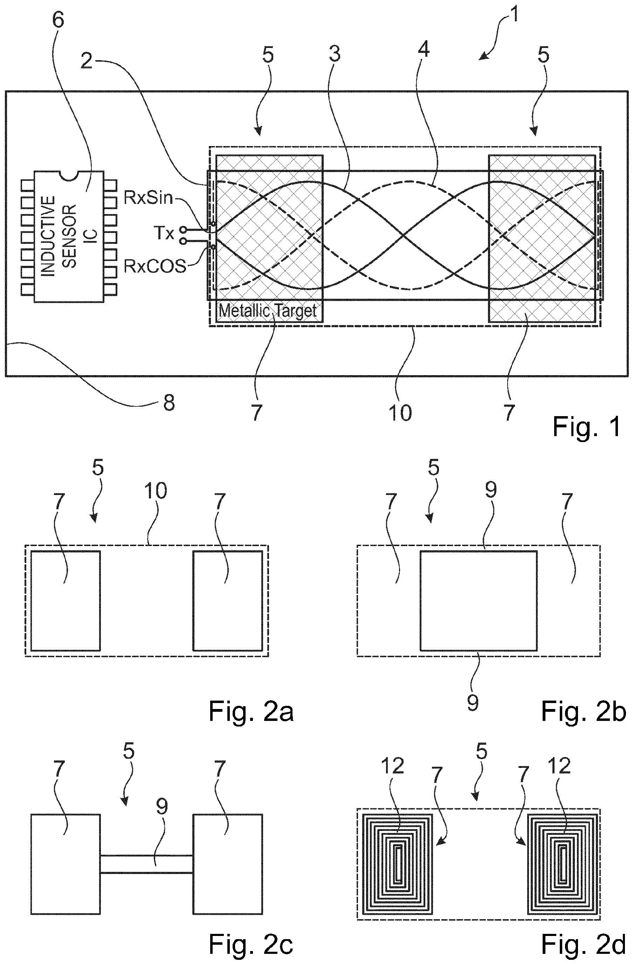

Fig. 1 shows a schematic view of an embodiment of a linear inductive position sensor 1 according to the invention. The linear inductive position sensor 1 shown in Fig. 1 comprises a transmitter coil 2, a sine receiver coil 3, a cosine receiver coil 4, a moving target 5 and an electronic control circuit 6.

The linear inductive position sensor 1 implements a magnet-free technology, utilizing the physical principles of eddy currents or inductive coupling to detect the position of the target 5 that is moving along a linear sensing direction above the receiver coils 3, 4. The transmitter coil 2 and the sine and cosine receiver coils 3, 4 are arranged such that the transmitter coil 2 induces a secondary voltage in the two receiver coils 3, 4, which depends on the position of the conductive, e.g. metallic, target 5 above the receiver coils 3, 4. Therefore, the electronic control circuit 6 of the linear inductive sensor 1 comprises an oscillator that generates a radio-frequency signal, which is applied to the transmitter coil 2 to create a high frequency magnetic field. This high frequency magnetic field is picked up by the sine receiver coil 3 and the cosine receiver coil 4. Depending on the position of the conductive target 5 above over coils 2, 3, 4, the secondary voltage picked up by the sine and cosine receiver coils 3, 4 is changing in amplitude and phase, allowing the determination of the target's position by analysing these effects.

A signal representation of the target's position over the coils 2, 3, 4 is obtained by demodulating and processing the secondary voltages from the receiver coils 3, 4 in the electronic control circuit 6. Usually, the electronic control circuit 6 filters the received signals. After demodulating and amplifying the filtered signals the received signals are converted to a digital signal by an analog-to-digital converter and further processed in a digital signal processor of the electronic control circuit 6. Particularly, the received signals are converted from sine and cosine signals into an angle representation by means of a CORDIC algorithm, transforming rectangular coordinates to polar coordinates. Following this digital signal processing, a signal representative of the target's position over the coils 2, 3, 4 is available in digital format and fed to an output interface of the linear inductive position sensor 1.

According to the embodiment shown in Fig. 1 the transmitter coil 2 and the sine and cosine receiver coils 3, 4 and the electronic control circuit 6 are arranged on a single printed circuit board 8.

According to the present invention the moving target 5 comprises at least two elements 7 that are spaced from each other and fixed relative to each other, so that they move simultaneously. The at least two elements 7 consist of or comprise a conductive material, like any kind of metal, such as aluminium, steel or a printed circuit board with a printed copper layer. The at least two elements 7 may also comprise wire loops or passive resonant circuits having of inductances and capacitors.

In the embodiment shown in Fig. 1 the two elements 7 of the moving target 5 are arranged on a solid body 10, which is non-conductive. Due to the solid body 10 the two elements 7 move simultaneously and cannot move relative to each other. Particularly, the solid body 10 moves along the linear sensing direction of the linear inductive position sensor 1.

The distance between the two elements 7 of the moving target 5 is smaller than or equal to the length of the at least two receiver coils 3, 4 or the length of the transmitter coil 2 in the linear sensing direction. Preferably, the distance between the outer ends of the two elements 7 of the moving target 5 in the linear sensing direction is smaller than or equal to the length of the at least two receiver coils 3, 4 or the length of the transmitter coil 2 in the linear sensing direction. Pursuant to the embodiment shown in Fig. 1 the distance between the outer ends of the two elements 7 of the moving target 5 in the linear sensing direction is smaller than or equal to the length of the at least two receiver coils 3, 4 in the linear sensing direction. This guarantees that at least in one position both elements are completely arranged above the sine receiver coil 3 and the cosine receiver coil 4.

As can be further seen from Fig. 1 the transmitter coil 2 is arranged outside of the two receiver coils 3, 4, particularly in the circumference of the at least two receiver coils 3, 4.

Fig. 2 shows different embodiments of a moving target 5 for a linear inductive position sensor 1 according to the invention.

Fig. 2a shows a detailed view of the moving target 5 with two conductive elements 7 of the embodiment shown in Fig. 1. The two conductive elements 7 of the moving target 5 are arranged on a solid body 10 and consist of or comprise a metal.

Fig. 2b shows a second embodiment of a moving target 5 according to the present invention. The moving target 5 comprises two conductive elements 7, which are connected to each other via two connecting portions 9. According to the embodiment of Fig. 2b the two elements 7 and the two connecting portions 9 are build integrally, so that the two connecting portions are also conductive.

Fig. 2c shows a third embodiment of a moving target 5 with two conductive elements 7. The two conductive elements 7 are connected to each other via a single connecting portion 9. Since the connecting portion 9 is a separate element, it can be non-conductive or conductive.

Fig. 2d shows a fourth embodiment of a moving target 5 with two conductive elements 7. The moving target 5 comprises a printed circuit board 11 and the two conductive elements 7 comprise copper traces 12 printed on the circuit board 11. Only the printed copper traces 12 are conductive, while the remaining printed circuit board 11 is non-conductive.

Due to the solid body 10, the one or more connecting portions 9 and/or the printed circuit board 11 the two conductive elements 7 of the moving target 5 move simultaneously and not relative to each other. This also guarantees that the spacing between the two elements 7 is fixed.

### List of reference numerals

- 1: linear inductive position sensor
- 2: transmitter coil
- 3: sine receiver coil
- 4: cosine receiver coil
- 5: moving target
- 6: electronic control circuit
- 7: conductive element (moving target)
- 8: printed circuit board (position sensor)
- 9: connecting portions
- 10: solid body (moving target)
- 11: printed circuit board (moving target)
- 12: copper traces.

## Claims

1. Linear inductive position sensor (1), comprising a transmitter coil (2) and at least two receiver coils (3, 4), particularly a sine receiver coil (3) and a cosine receiver coil (4), a moving target (5) and an electronic control circuit (6),
**characterized in that**
the moving target (5) comprises at least two elements (7) that are spaced from each other and fixed relative to each other, so that they move simultaneously.

2. Linear inductive position sensor (1) according to claim 1, wherein at least the transmitter coil (2) and the at least two receiver coils (3, 4), preferably also the electronic control circuit (6), are arranged on a single printed circuit board (8).

3. Linear inductive position sensor (1) according to claim 1 or claim 2, wherein the moving target (5), particularly the at least two elements (7), comprise a printed circuit board (11) and/or metallic components.

4. Linear inductive position sensor (1) according to any of claims 1 to 3, wherein the two elements (7) of the moving target (5) are independent of each other or connected via one or more connecting portions (9).

5. Linear inductive position sensor (1) according to any of claims 1 to 4, wherein the at least two elements (7) of the moving target (5) are arranged on a solid body (10), particularly a non-conductive solid body.

6. Linear inductive position sensor (1) according to any of claims 1 to 5, wherein the distance between the at least two elements (7) of the moving target (5) is smaller than or equal to the length of the at least two receiver coils (3, 4) or the length of the transmitter coil (2) in the linear sensing direction.

7. Linear inductive position sensor (1) according to claim 6, wherein the distance between the outer ends of the at least two elements (7) of the moving target (5) in the linear sensing direction is smaller than or equal to the length of the at least two receiver coils (3, 4) or the length of the transmitter coil (2) in the linear sensing direction.

8. Linear inductive position sensor (1) according to any of claims 1 to 7, wherein the electronic control circuit (6) comprises an oscillator connected to the transmitter coil (2) and a signal conditioning and processing unit connected to the at least two receiver coils (3, 4).

9. Linear inductive position sensor (1) according to any of claims 1 to 8, comprising two receiver coils (3, 4), particularly a sine receiver coil (3) and a cosine receiver coil (4).

10. Linear inductive position sensor (1) according to any of claims 1 to 9, wherein the transmitter coil (2) is arranged outside of the at least two receiver coils (3, 4), particularly in the circumference of the at least two receiver coils (3, 4).
